# EUROPÄISCHE PATENTSCHRIFT

(11) **EP 1 621 852 B1**
(45) Veröffentlichungstag und Bekanntmachung des Hinweises auf die Patenterteilung: **23.10.2013**
(21) Anmeldenummer: 05104657.1
(22) Anmeldetag: 31.05.2005
(51) Int. Cl.: G01C 21/36

(54) **Verfahren zur Überprüfung von Routenoptionen in Navigationssystemen und Navigationssystem hierzu**
Method of reviewing routing options in navigation systems and corresponding navigation system
Procédé d'examen d'options de planification d'itinéraire dans des systèmes de navigation et système de navigation correspondant

(30) Priorität: 30.07.2004 DE 102004037126
(43) Veröffentlichungstag der Anmeldung: 01.02.2006
(73) Patentinhaber: ROBERT BOSCH GMBH, 70442 Stuttgart (DE)
(72) Erfinder: Friedrichs, Arne, 38114, Braunschweig (DE); Draeger, Gerd, 38102, Braunschweig (DE)

(56) Entgegenhaltungen:
- US-A- 5 243 528
- US-A- 5 652 706
- US-A- 5 729 217

## Beschreibung

Die Erfindung betrifft ein Navigationssystem und ein Verfahren zur Überprüfung von Routenoptionen in Navigationssystemen, insbesondere bei Kraftfahrzeugen.

Aus dem Stand der Technik sind Navigationssysteme bekannt, die eine Routenberechnung in Abhängigkeit bestimmter Routenoptionen, wie z. B. schnellste Route oder kürzeste Route, mit Autobahnen oder ohne Autobahnen, durchführen. Die zur Routenoptimierung genutzten Parameter sind in der Regel fest vom Nutzer vorgegeben. Zu den einzustellenden Parametern gehören beispielsweise die Fahrstrecke oder die errechnete Fahrdauer, wobei gegebenenfalls zwischen verschiedenen Parametern eine Abwägung getroffen wird, beispielsweise bei einem Konflikt zwischen der schnellsten Route und der kürzesten Route.

Weiterhin ist es möglich, Strecken mit bestimmten Eigenschaften zu sperren, beispielsweise Strecken ohne Autobahnanteil auszuwählen, Mautstrecken zu meiden, keine Ortsdurchfahrten vorzusehen oder nach Möglichkeit Fährverbindungen zu meiden.

Darüber hinaus ist es möglich, verschiedene Streckenabschnitte für zukünftige Navigationen zu sperren, beispielsweise aufgrund von Baustellen oder bekannten Staus, so dass eine Route unter Meidung der gesperrten Streckenabschnitte errechnet wird.

Aus der EP 0 803 705 A2 ist ein Verfahren bekannt, bei dem eine vorgeschlagene Route mit einer aus gespeicherten Koeffizienten alternativ berechneten Route verglichen wird. Die Koeffizienten werden dabei aus gespeicherten Beobachtungen bereits gefahrener Routen ermittelt und weiter verfeinert. Die Koeffizienten entsprechen somit den speziellen Nutzereigenschaften oder Nutzerpräferenzen. Die Aktionen eines Fahrzeugnutzers werden während der Fahrt durch Modul beobachtet und in Form von Koeffizienten, wie z. B. der Anzahl von Kurven auf eine bestimmte Streckenlänge oder der Breite der Straße abgespeichert und in eine neue Routenberechnung einbezogen. Präferiert der Fahrzeugnutzer breite Strecken, wird dieses bei der zukünftigen Navigation berücksichtigt.

Aus der US 5,243,528 ist ein Navigationssystem für ein Landfahrzeug bekannt, das unter anderem Funktionen für den Fall beinhaltet, dass nicht die ausgewählte Route gefahren wird.

Die Vielzahl der Einstellmöglichkeiten bei Navigationssystemen kann zur Folge haben, dass voreingestellte Routenoptionen vorheriger Benutzer übernommen werden, so dass nicht die Route berechnet wird, die den gewünschten Routenoptionen des Nutzers entspricht.

Aufgabe der vorliegenden Erfindung ist es, ein Verfahren bereitzustellen, mit dem die Bedienung von Navigationssystemen sowie die Berechnung optimaler Routen durch Navigationssysteme erleichtert werden.

Erfindungsgemäß wird diese Aufgabe durch ein Verfahren mit den Merkmalen des Anspruchs 1 gelöst, bei dem zunächst festgestellt wird, ob Fahranweisungen befolgt bzw. nicht befolgt werden oder ob Strecken befahren werden, die nicht den eingestellten Routenoptionen entsprechen. Dies geschieht beispielsweise dadurch, dass über ein Positionsbestimmungsmodul die aktuelle Position des Fahrzeuges ermittelt und mit Kartendaten einer digitalen Karte verglichen wird, ob diese Position auf der errechneten Route liegt. Sobald akustische oder optische Fahranweisungen nicht befolgt werden und festgestellt wird, dass das Fahrzeug die vorbestimmte Route verlassen hat, wird dies registriert und überprüft, ob die aktuell befahrene Straße den bei der Routenberechnung eingestellten Routenoptionen entspricht. Fährt der Nutzer nicht auf der kürzesten Streck oder nutzt er einen Straßentyp, der in der Einstellung des Navigationssystems bei der Routenberechnung ausgeschlossen werden sollte, wird eine Abfrage ausgegeben, z.B. ob die eingestellte Routenoption bzw. die eingestellten Routenoptionen geändert werden sollen. Alternativ dazu ist es möglich, dass die eingestellte Routenoption automatisch verändert und an die abweichenden Streckenvorlieben des Fahrzeugnutzers angepasst werden.

Ebenso ist es vorgesehen, dass der Nutzer gefragt wird, ob die eingestellte Routenoption geändert werden soll, ob Streckenabschnitte gesperrt werden sollen, ob die Zielführung beendet werden soll oder ob das Navigationssystem unverändert fortfahren soll. Auf die entsprechende Antwort des Nutzers hin wird die Zielführung angepasst, beendet oder unverändert fortgesetzt.

Eine Weiterbildung der Erfindung sieht vor, dass die automatische Anpassung einer oder mehrerer Routenoptionen vorzugsweise auf der Grundlage der befahrenen Streckentypen erfolgt, also dass bei dem Befahren von Autobahnen trotz der eingestellten Option, Autobahnen zu meiden, die neue Routenberechnung mit der Option erfolgen soll, dass Autobahnen berücksichtigt oder bevorzugt berücksichtigt werden sollen.

Ebenfalls ist es vorgesehen, dass dem Benutzer eine Bestätigungsanfrage übermittelt wird, wenn eine Routenoption automatisch geändert wird. Der Nutzer wird nach der Veränderung der eingestellten Routenoption gefragt, ob die neue Routenoption gewünscht ist. So wird vermieden, dass bei einer automatischen Anpassung der Routenoption bei der Neuberechnung einer Route ein versehentliches Nichtbeachten einer Fahranweisung oder ein versehentliches Abweichen von der Route als ein Zeichen zur Veränderung der gewählten Routenoption aufgefasst wird.

Eine spezielle Ausführungsform des Verfahrens sieht vor, dass bei Nichtbefolgen von Fahranweisungen, die auf Routen mit bestimmten Routenoptionen führen, abgefragt wird, ob Strecken mit diesen Eigenschaften bei der weiteren Navigation ausgeschlossen oder die Routenoptionen entsprechend geändert werden sollen. Bei einmaligem oder mehrmaligem Nichtbefolgen von Fahranweisungen, die beispielsweise auf Autobahnen führen, wird dann der Nutzer für die zukünftige Routenberechnung befragt, ob die Routenoption "Autobahn" für die weitere Routenberechnung ausgeschlossen werden soll. Ebenfalls ist es vorgesehen, dass eine solche Routenoption bei der weiteren Navigation bzw. bei der erneuten Routenberechnung automatisch ausgeschlossen wird.

Eine Weiterbildung sieht vor, dass der aktuell befahrene Streckenabschnitt mit den eingestellten Routenoptionen verglichen wird und bei Abweichungen oder Widersprüchen abgefragt wird, ob die widersprüchliche, eingestellte Routenoption geändert und bei der weiteren Navigation angepasst werden soll. Bei einer automatischen Anpassung der Routenoption wird die eingestellte Routenoption bei der weiteren Navigation bzw. Routenberechnung ausgeschlossen.

Die vorliegenden Navigationssysteme bzw. Verfahren zur Routenberechnung berücksichtigen viele Parameter, um eine aus Nutzersicht möglichst optimale Route zu finden. Gerade für Personen, die in dem Umgang mit Navigationssystemen nicht sehr vertraut sind oder für Fahrer von Mietwagen oder bei Fahrzeugen mit häufig wechselnden Fahrern bergen diese Einstellmöglichkeiten eine potentielle Fehlerquelle, wenn eingestellte oder voreingestellte Werte vor Fahrtbeginn bzw. vor Beginn der Routenberechnung nicht den persönlichen Bedürfnissen angepasst werden. Das Navigationssystem gibt dann Routen aus, die von dem Nutzer nicht erwartet werden, was zu Verwirrungen führen kann und zumindest die Kundenakzeptanz mindert.

Durch die automatische Erkennung von potentiell falsch eingestellten Routenoptionen wird dem Nutzer eine Komfortfunktion angeboten, mit der die Kundenakzeptanz erhöht wird und die Sicherheit im Verkehr gewährleistet wird, da die ausgegebene und errechnete Route des Navigationssystemes den Erwartungen des Nutzers entspricht. Die Erwartungen können beispielsweise aus Erfahrungen herrühren, die dieser mit einem Navigationssystem bereits gewonnen hat.

Folgt ein Fahrer einer Fahranweisung, z. B. "rechts abbiegen" nicht, wird das Navigationssystem in der Regel eine Alternativroute mit neuen Fahranweisungen berechnen. Im Falle falsch eingestellter Routenoptionen wird jedoch keine der folgenden Alternativrouten mit der von dem Nutzer eingeschlagenen Route übereinstimmen, da die Routenoptionen nicht übereinstimmen. Eine mögliche Anwendung des erfindungsgemäßen Verfahrens sieht vor, dass bei ein- oder mehrmaligem Nichtbefolgen von Fahranweisungen durch einen Fahrer, vorzugsweise bei mehrmaligem aufeinderfolgenden Nichtbefolgen von Fahranweisungen von einer Benutzerinteraktion das weitere Vorgehen erfragt wird. Als auswählbare Alternativen für die Routenoption ist entweder ein manuelles Ändern von Routenoptionen, ein manuelles Sperren von Straßenabschnitten, eine neue Zielwahl, eine Beendung der Zielführung oder eine unveränderte Fortsetzung der Navigation mit einem unveränderten Ziel vorgesehen.

Ebenfalls ist es möglich, dass bei einem Befahren einer Strecke, die eine oder mehreren "meide"-Optionen widerspricht, also entgegen der eingestellten Routenoption "meide Fährverbindungen" eine Fähre benutzt oder bei "meide Autobahn" eine Autobahn befahren wird, der Nutzer befragt wird, ob die entsprechende Routenoption deaktiviert werden soll. Alternativ wird die entsprechende Routenoption vollautomatisch deaktiviert.

Umgekehrt ist es möglich, dass "meide"-Optionen durch Vergleichen der Attribute der vom Nutzer nicht akzeptierten Strecke in der digitalen Karte mit den gewählten Routenoptionen automatisch erkannt werden. Befolgt der Nutzer jeweils Fahranweisungen nicht, die auf Strecken mit bestimmten Eigenschaften führen, wird er gefragt, ob die den Eigenschaften entsprechende "meide"-Option aktiviert werden soll. Alternativ kann die entsprechende Option auch vollautomatisch aktiviert werden.

Auch ist es möglich, dass das Navigationssystem mehrere alternative Routen mit variierten Routenoptionen berechnet, nachdem der Fahrer mehrfach Fahranweisungen nicht befolgt hat. Das System wählt dann automatisch diejenige Route bzw. deren Routenoptionen aus, deren Verlauf bzw. deren Routenoptionen am besten mit der bisher gefahrenen Strecke übereinstimmen. Alternativ kann der Benutzer zur Bestätigung der Route oder der Routenoptionen, die der besten Route entsprechen, aufgefordert werden.

Erfindungsgemäss erfolgt eine Abfrage an den Nutzer oder eine Anpassung von Routenoptionen erst dann, wenn die Anzahl der nicht befolgten Fahranweisungen eine vordefinierte Anzahl überschritten hat oder wenn das Nichtbefolgen von Fahranweisungen eine vordefinierte Zeit und/oder Strecke andauert. Zusätzlich ist es vorgesehen, dass der Nutzer entscheiden kann, ob Routenoptionen entweder temporär für die Dauer der aktiven Zielführung oder dauerhaft angepasst werden.

In einem ersten Ausführungsbeispiel lässt der Fahrer eines Mietwagens von einem eingebauten Navigationsgerät eine Route berechnen und startet die Zielführung. Da der vorherige Nutzer die Routenoption "Autobahn meiden" aktiviert hatte, berechnet das Navigationssystem eine ungünstigere Route über die Landstraße, anstatt die optimale Route über die Autobahn zu wählen. Da der Fahrer eine Autobahnfahrt bevorzugt und grobe Ortskenntnis besitzt, fährt er entgegen der Navigationsanweisungen auf die Autobahn. Durch das erfindungsgemäße Verfahren wird nun anhand der Attribute der aktuell befahrenen Strecke in der digitalen Karte erkannt, dass der Fahrer die Autobahn offensichtlich nicht meidet. Der Fahrer wird befragt, ob die Routenoption "Autobahn meiden" deaktiviert werden soll. Nach positiver Bestätigung durch den Fahrer berechnet das Navigationssystem die Route mit der geänderten Routenoption neu und wählt dadurch die für den Nutzer optimale Strecke über die Autobahn.

In einem zweiten Beispiel lässt der Fahrer eines Mietwagens von dem eingebauten Navigationssystem eine Route berechnen und startet die Zielführung. Da der vorherige Nutzer die Routenoption "Fähre meiden" deaktiviert hatte, berechnet das Navigationssystem eine Route, die eine Fähre beinhaltet. Da der Fahrer aber eine Strecke ohne Fähre bevorzugt und grobe Ortskenntnis besitzt, fährt dieser entgegen den Navigationsanweisungen auf eine Strecke über Land, die offensichtlich die Fähre umgehen soll. Durch das erfindungsgemäße Verfahren wird nun anhand der Attribute der aktuell befahrenen Strecke in der digitalen Karte erkannt, dass der Fahrer die Fähre offensichtlich meidet und fragt in einem Dialog nach, ob die Routenoption "Fähre meiden" aktiviert werden soll. Nach der Bestätigung durch den Fahrer berechnet das Navigationssystem die Route mit den geänderten Routenoptionen neu und wählt dadurch die für den Nutzer optimale Strecke ohne eine Fährverbindung.

In einem dritten Beispiel fährt der Nutzer eines Navigationssystems eine Strecke von Hamburg nach München. Einen Tag zuvor ist die Tochter des Nutzers mit dem Fahrzeug unterwegs gewesen und hatte die Optionen "Autobahn meiden" und "kürzeste Route" aktiviert. Da der Nutzer in Hamburg zumindest grobe Ortskenntnisse besitzt, fährt er zielstrebig zur nächstgelegenen Autobahn. Nachdem er dann sein Ziel definiert hat und die Zielführung gestartet wurde, leitete ihn das Navigationssystem ständig in eine Richtung, die von der Autobahn wegführt, um die kürzeste Route einzuschlagen. Nach drei Minuten Fahrzeit und dem Nichtbefolgen von Fahranweisungen beginnt das Navigationssystem im Hintergrund für jede Kombination von Routenoptionen eine neue Route zu berechnen. Nachdem alle Berechnungen abgeschlossen sind, werden die Routenoptionen der wahrscheinlichsten Route dem Nutzer zur Aktivierung vorgeschlagen. Der Nutzer bestätigt daraufhin den Vorschlag, und die Zielführung entlang dieser Route wird sofort gestartet.

## Patentansprüche

1. Verfahren zur Überprüfung von Routenoptionen in Navigationssystemen, bei dem zunächst festgestellt wird, ob Fahranweisungen des Navigationssystems nicht befolgt werden und/oder Strecken befahren werden, die nicht den eingestellten Routenoptionen entsprechen, und bei dem dann entsprechend dem festgestellten Ergebnis eine Abfrage hinsichtlich einer Änderung der eingestellten Routenoption an den Nutzer generiert wird oder bei dem die eingestellte Routenoption gegebenenfalls automatisch verändert wird, **dadurch gekennzeichnet, dass** eine Abfrage an den Nutzer erst dann generiert wird oder eine automatische Veränderung der eingestellten Routenoption erst dann erfolgt, wenn die Anzahl der nicht befolgten Fahranweisungen eine vordefinierte Anzahl überschritten hat oder wenn das Nichtbefolgen von Fahranweisungen eine vordefinierte Zeit und/oder Strecke andauert.

2. Verfahren nach Anspruch 1, **dadurch gekennzeichnet, dass** der Nutzer gefragt wird, ob die eingestellte Routenoption geändert werden soll, ob Streckenabschnitte gesperrt werden sollen, ob die Zielführung beendet werden soll oder ob das Navigationssystem mit der Zielführung unverändert fortfahren soll.

3. Verfahren nach Anspruch 1, **dadurch gekennzeichnet, dass** eine automatische Anpassung der Routenoption auf der Grundlage der befahrenen Streckentypen erfolgt.

4. Verfahren nach Anspruch 1 oder 3, **dadurch gekennzeichnet, dass** an den Nutzer eine Bestätigungsanfrage ausgegeben wird, ob die automatisch gewählte Routenoption gewünscht wird.

5. Verfahren nach einem der voranstehenden Ansprüche, **dadurch gekennzeichnet, dass** bei Nichtbefolgen von Fahranweisungen, die auf Routenabschnitte mit bestimmten Routenoptionen führen, abgefragt wird, ob Strecken mit diesen Eigenschaften bei der weiteren Navigation gemieden und die Routenoption entsprechend geändert werden soll.

6. Verfahren nach einem der Ansprüche 1 bis 3, **dadurch gekennzeichnet, dass** die aktuell befahrene Strecke mit der eingestellten Routenoption verglichen wird und bei Widersprüchen abgefragt wird, ob die widersprüchliche Routenoption bei der weiteren Navigation angepasst geändert werden soll.

7. Verfahren nach einem der voranstehenden Ansprüche, **dadurch gekennzeichnet, dass** bei Nichtbefolgen von Fahranweisungen mehrere Routen mit variierten Routenoptionen berechnet werden und die Routenoptionen derjenigen Route, dessen Verlauf am Besten mit der bisher zurückgelegten Strecke übereinstimmt, für die weitere Navigation verwendet werden.

8. Verfahren nach einem der voranstehenden Ansprüche, **dadurch gekennzeichnet, dass** der Nutzer entscheiden kann, ob Routenoptionen entweder temporär für die Dauer der aktiven Zielführung oder dauerhaft angepasst werden.

9. Navigationssystem mit zur Durchführung aller Schritte des Verfahrens nach einem der vorhergehenden Ansprüche angepassten Mitteln.

## Claims

1. Method for checking route options in navigation systems, which first of all involves establishing whether driving instructions from the navigation system are not being followed and/or roads that do not correspond to the selected route options are being used and which then involves the result established being taken correspondingly as a basis for generating a query for the user regarding an alteration in the selected route option or which involves the selected route option possibly being altered automatically, **characterized in that** a query for the user is generated, or the selected route option is automatically altered, only when the number of driving instructions that are not being followed has exceeded a predefined number or when the non-following of driving instructions lasts for a predefined time and/or distance.

2. Method according to Claim 1, **characterized in that** the user is asked whether the selected route option needs to be changed, whether road sections need to be closed, whether the routing needs to be terminated or whether the navigation system needs to continue with the routing unchanged.

3. Method according to Claim 1, **characterized in that** the route option is automatically adjusted on the basis of the road types being used.

4. Method according to Claim 1 or 3, **characterized in that** a confirmation request regarding whether the automatically selected route option is desired is output to the user.

5. Method according to one of the preceding claims, **characterized in that** when driving instructions that lead to route sections with particular route options are not being followed a query is made to determine whether roads having these properties need to be avoided during the further navigation and the route option needs to be changed accordingly.

6. Method according to one of Claims 1 to 3, **characterized in that** the currently used road is compared with the selected route option and in the event of inconsistencies a query is made to determine whether the inconsistent route option needs to be changed as an adjustment during the further navigation.

7. Method according to one of the preceding claims, **characterized in that** when driving instructions are not being followed a plurality of routes with varied route options are calculated and the route options on that route whose course best matches the road covered hitherto are used for the further navigation.

8. Method according to one of the preceding claims, **characterized in that** the user can decide whether route options are adjusted either temporarily for the duration of the active routing or permanently.

9. Navigation system having means adapted to carry out all the steps of the method according to one of the preceding claims.

## Revendications

1. Procédé d'examen d'options de planification d'itinéraire dans des systèmes de navigation, dans lequel on détecte d'abord si les indications de conduite du système de navigation ne sont pas suivies et/ou si des tronçons ne correspondant pas aux options de planification d'itinéraire mises en place sont empruntés et en cas de résultat détecté correspondant, une demande relative à une modification de l'option de planification d'itinéraire mise en place est envoyée à un utilisateur ou l'option de planification d'itinéraire mise en place est également modifiée automatiquement, **caractérisé en ce qu'**une demande est d'abord envoyée à l'utilisateur ou qu'une modification automatique de l'option de planification d'itinéraire mise en place est d'abord effectuée lorsque le nombre des indications de conduite non suivies dépasse un nombre prédéfini ou lorsque le non-suivi des indications de conduite dure pendant une durée prédéfinie et/ou sur un tronçon prédéfini.

2. Procédé selon la revendication 1, **caractérisé en ce que** l'utilisateur est interrogé pour savoir si l'option de planification d'itinéraire mise en place doit être modifiée, si des sections de tronçon doivent être écartées, si la navigation doit prendre fin ou si le système de navigation doit poursuivre la navigation sans effectuer de changement.

3. Procédé selon la revendication 1, **caractérisé en ce qu'**une adaptation automatique de l'option de planification d'itinéraire se produit en fonction des types de tronçon empruntés.

4. Procédé selon la revendication 1 ou 3, **caractérisé en ce qu'**une demande de confirmation du souhait de l'utilisateur d'utiliser l'option de planification d'itinéraire sélectionnée automatiquement est envoyée à l'utilisateur.

5. Procédé selon l'une quelconque des revendications précédentes, **caractérisé en ce qu'**on demande, en cas de non-suivi des indications de conduite conduisant à des sections d'itinéraire avec des options de planification d'itinéraire définies, si des tronçons comportant ces propriétés doivent être évités pour les navigations ultérieures et si l'option de planification d'itinéraire doit être modifiée de façon correspondante.

6. Procédé selon l'une quelconque des revendications 1 à 3, **caractérisé en ce que** le tronçon actuellement parcouru est comparé à l'option de planification d'itinéraire mise en place et qu'il est demandé, en cas de contradictions, si l'option de planification d'itinéraire contradictoire doit être modifiée de façon à être adaptée pour toute navigation ultérieure.

7. Procédé selon l'une quelconque des revendications précédentes, caractérisé en qu'en cas de non-suivi des indications de conduite, plusieurs itinéraires avec des options de planification d'itinéraire variables sont calculés et que les options de planification d'itinéraire de l'itinéraire dont la trajectoire correspond au mieux au tronçon mis en mémoire jusqu'ici sont utilisées pour toutes les navigations ultérieures.

8. Procédé selon l'une quelconque des revendications précédentes, **caractérisé en ce que** l'utilisateur peut décider si les options de planification d'itinéraire sont adaptées soit durablement soit temporairement pour la durée de la navigation active.

9. Système de navigation doté de moyens adaptés à la mise en oeuvre de toutes les étapes du procédé selon l'une quelconque des revendications précédentes.
